# EUROPÄISCHE PATENTANMELDUNG

(11) **EP 1 258 606 A2**
(43) Veröffentlichungstag der Anmeldung: **20.11.2002**
(21) Anmeldenummer: 02006844.1
(22) Anmeldetag: 26.03.2002
(51) Int. Cl.: F01N 3/28, F01N 1/08, F01N 1/24

(54) **Kombinierte Abgasnachbehandlungs-/Schalldämpfungsvorrichtung im Abgasstrang einer Brennkraftmaschine**

(30) Priorität: 14.05.2001 DE 10123360
(71) Anmelder: MAN Nutzfahrzeuge Aktiengesellschaft, 80976 München (DE); ROTH-TECHNIK AUSTRIA Gesellschaft m.b.H., 3193 St. Aegyd/Neuwalde (AT)
(72) Erfinder: Jacob, Eberhard, Dr. Dipl.-Chemiker, 82152 Krailling (DE); Mai, Hans-Peter, 76456 Kupperheim (DE)

(57) **Zusammenfassung**

Die Erfindung betrifft eine kombinierte Abgasnachbehandlungs-/Schalldämpfungsvorrichtung im Abgasstrang einer Brennkraftmaschine, insbesondere Dieselmotor eines Nutzfahrzeuges wie Lastkraftwagen oder Omnibus, mit einem Schalldämpfer (1), der räumlich durch eine vordere und hintere Stirnwand (2, 3) sowie eine Umfangsaußenwand (4) begrenzt ist und in dessen Innenraum nachzubehandelndes Abgas einleitbar ist, das nach Durchströmung wenigstens eines dort eingebauten Abgasnachbehandlungsmoduls (11) gereinigt und mittelbar schallgedämpft wieder aus dem Schalldämpfer (1) ausleitbar ist.

Die Erfindung kennzeichnet sich dadurch, dass der Schalldämpfer (1) an seiner abgasaustrittsseitigen Stimwand (3) und/oder dem abgasaustrittsseitigen Endbereich seiner Umfangsaußenwand (4) oder einem für Abgasauslass vorgesehenen Bereich (21) seiner abgaseintrittsseitigen Stirnwand (2) eine oder mehrere für einen direkten, endrohrlosen Auslass des gereinigten Abgases in die Atmosphäre entsprechend gestaltete Auslassöffnung(en) (22) aufweist.

## Beschreibung

Die Erfindung betrifft eine kombinierte Abgasnachbehandlungs-/Schalldämpfungsvorrichtung im Abgasstrang einer Brennkraftmaschine, insbesondere Dieselmotor eines Nutzfahrzeuges wie Lastkraftwagen oder Omnibus, mit einem Schalldämpfer, der räumlich durch eine vordere und hintere Stirnwand sowie eine Umfangsaußenwand begrenzt ist und in dessen Innenraum nachzubehandelndes Abgas einleitbar ist, das nach Durchströmung wenigstens eines dort eingebauten Abgasnachbehandlungsmoduls gereinigt und mittelbar schallgedämpft wieder aus dem Schalldämpfer ausleitbar ist.

Auf dem 21. Internationalen Wiener Motorensymposium am 04./05. Mai 2000 (siehe auch Fortschrittsberichte VDI Reihe 12, Nr. 420, Band 2 (2000), Seiten 311-329) wurde von Dr. E. Jacob und Dipl.-Ing. A. Döring, beide MAN Nutzfahrzeuge AG, Nürnberg, über verschiedene Abgasnachbehandlungssysteme referiert. Unter anderem wurden dabei verschiedene mit Schalldämpfern kombinierte Abgasnachbehandlungssysteme auch bildhaft dargestellt. Ein erstes GD-Kat-Modulsystem umfasst extern eines Hauptschalldämpfers für ein Nutzfahrzeug einen Vorkatalysator und einen Hydrolysekatalysator in einer vom Fahrzeugmotor kommenden Abgasleitung. Innerhalb des Hauptschalldämpfers sind in modularer Anordnung fünf aus je einem SCR-Katalysator und einem Ammoniaksperrkatalysator bestehende Kat-Module angeordnet, wobei das über die Abgasleitung in den Einströmraum des Hauptschalldämpfers eingeleitete, im Vor- und Hydrolysekatalysator schon aufbereitete Abgas bei Durchströmung der Kat-Module gereinigt wird und dann in einen Austrittsraum gelangt. Aus diesem Austrittsraum wird das gereinigte Abgas über ein hauptschalldämpferinternes, vergleichsweise langes Endrohr, das zumindest partiell mit schallabsorbierendem Material ausgekleidet oder umgeben ist, aus dem Hauptschalldämpfer ausgeleitet und gelangt nach Durchströmen eines mehr oder weniger langen Auslassstutzens in die Atmosphäre.

Bei einem weiteren GD-Kat-Modulsystem ist der Hydrolysekatalysator in den Innenraum des Hauptschalldämpfers integriert, in dem dann aus Platzgründen des weiteren auch nur zwei SCR-Kat-Module untergebracht sind, wobei dem strömungsmäßig zuletzt angeordneten noch ein Ammoniaksperrkat folgt. Das Abgas wird nach Durchströmen der Kat-Module in eine hauptschalldämpferinterne Abgasaustrittskammer übergeleitet und aus dieser über ein vergleichsweise langes externes Endrohr abgeführt. Dieses externe Endrohr führt über einen Nachschalldämpfer, der vergleichsweise viel Platz beansprucht und die Abgasanlage erheblich verteuert.

Akustisch im Sinne einer Schalldämpfung aktive Einbauten im Abgasweg stromabwärts der SCR-/Ammoniaksperrkatalysatoren rufen in der Regel einen mehr oder weniger starken Druckverlust hervor, der an sich vermieden werden sollte. Aus diesem Grund nimmt neben der Entwicklung der Abgasnachbehandlungskomponenten auch die Weiterentwicklung der Abgasschalldämpfung einen bedeutenden Stellenwert ein. Der Abgasschalldämpfung liegt die Theorie zugrunde, den/die Schalldämpfer und das Endrohr als akustisches Feder-Masse-System zu betrachten und aufeinander abzustimmen, wobei das Volumen die akustische Feder und das Endrohr die Masse darstellt. In der Praxis wird aber die Volumengröße und - platzierung in der Regel auf das anwendungsmäßige Fahrzeug bezogen festgelegt und durch optimale Auslegung des Durchmessers und der Länge des Endrohres das gewünschte Dämpfungsverhalten erreicht. Dieses führt aber in vielen Fällen zu erheblichen Einbauproblemen, insbesondere bei Seitenlageneinbau in Lastkraftwagen. Die Bestrebungen gingen bisher dahin, das Endrohr in zunehmendem Maß in den Hauptschalldämpfer zu integrieren. Letzteres führt jedoch in diesem zu einem Dämpfungsvolumenverlust, was sich wiederum im Dämpfungspotential und Rückdruckverhalten negativ bemerkbar macht. Außerdem bewirkt die Verlagerung des Endrohres in größerem Umfang in den Hauptschalldämpferinnenraum, dass dort der für die Unterbringung der Abgasnachbehandlungsmodule notwendige Raum verkleinert wird, bzw. das Hauptschalldämpfervolumen insgesamt vergrößert werden muss. Letzteres wiederum ist in einem Lastkraftwagen oder Omnibus nur begrenzt möglich.

Alle derzeit üblichen und bekannten Endrohrvarianten führen infolge Drosselung und Reibung zu einem Druckverlust und somit zu einem negativen Gegendruckverhalten im Abgas.

Es ist daher Aufgabe der Erfindung, einen Weg anzugeben, wie den Nachteilen, die bekannten kombinierten Abgasnachbehandlungs-/Schalldämpfungsvorrichtungen anhaften, abgeholfen werden kann.

Diese Aufgabe ist bei einer kombinierten Abgasnachbehandlungs-/Schalldämpfungsvorrichtung der gattungsgemäßen Art erfindungsgemäß entsprechend den kennzeichnenden Merkmalen des Anspruchs 1 dadurch gelöst, dass der Schalldämpfer an seiner abgasaustrittsseitigen Stirnwand und/oder dem abgasaustrittsseitigen Endbereich seiner Umfangsaußenwand oder einem für Abgasauslass vorgesehenen Bereich seiner abgaseintrittsseitigen Stirnwand eine oder mehrere für einen direkten, endrohrlosen Auslass des gereinigten Abgases in die Atmosphäre entsprechend gestaltete Auslassöffnung(en) aufweist.

Die Vorteile der erfindungsgemäßen Lösung sind darin begründet, dass das bisher notwendige Endrohr entfällt und im Innenraum des Schalldämpfers nun hinreichend Platz für die Unterbringung einer auch größeren Anzahl von Abgasnachbehandlungsmodulen sowie schalldämmender Ein- bzw. Anbauten vorhanden ist.

Nachstehend ist die erfindungsgemäße Lösung anhand mehrerer in der Zeichnung dargestellter Ausführungsbeispiele noch näher erläutert. In der Zeichnung zeigt jede Zeichnungsseite mit je einem Figurenpaar 1-2, 3-4, 5-6, 7-8, 9-10, 11-12, 13-14, 15-16, 17-18, 19-20, 21-22, 23-24, 25-26, 27-28 und 29-30 ein Ausführungsbeispiel der Erfindung, dabei die ungeradzahligen Figuren dieses im Längsschnitt und die gradzahligen Figuren dieses in Ansicht auf seiner Abgasaustrittsseite.

In den Figuren sind gleiche bzw. einander entsprechende Bauteile mit gleichen Bezugszeichen angezogen.

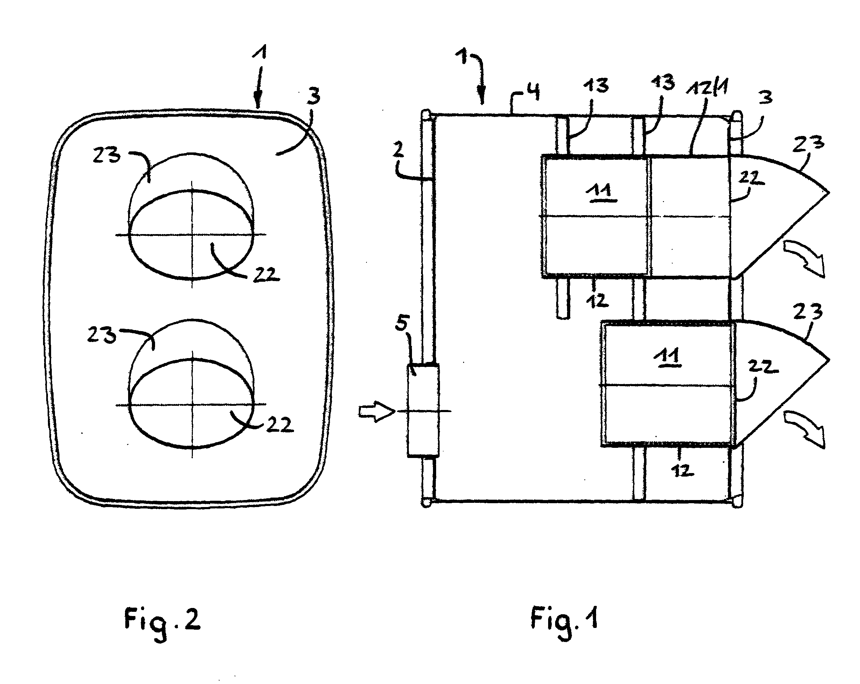

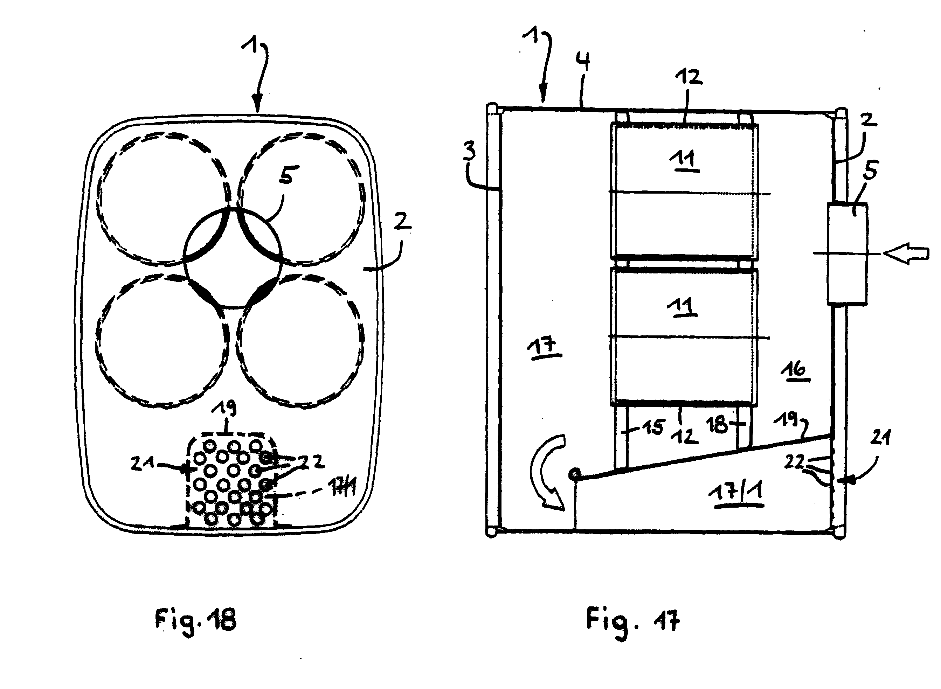

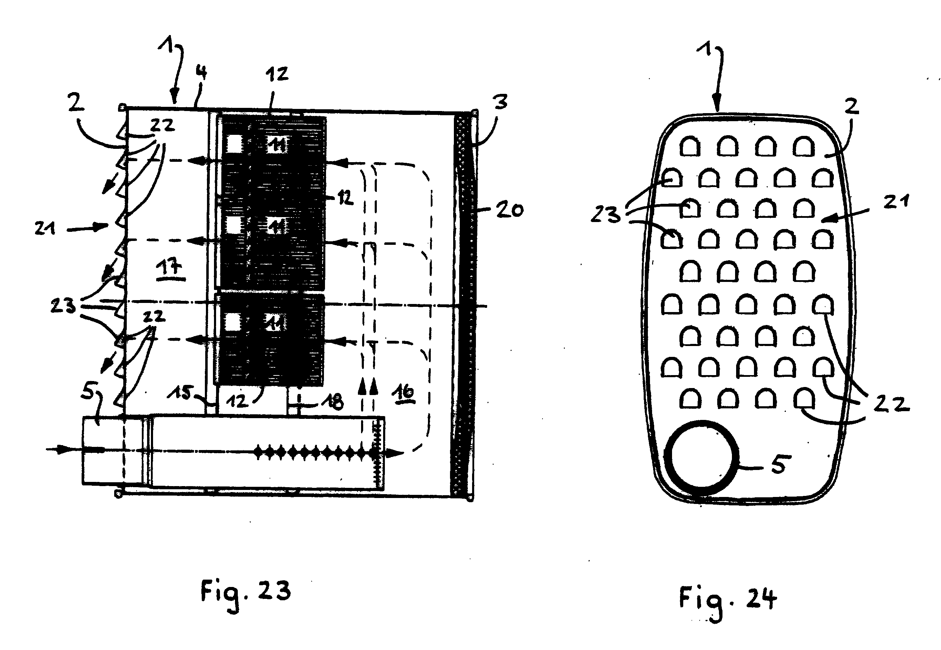

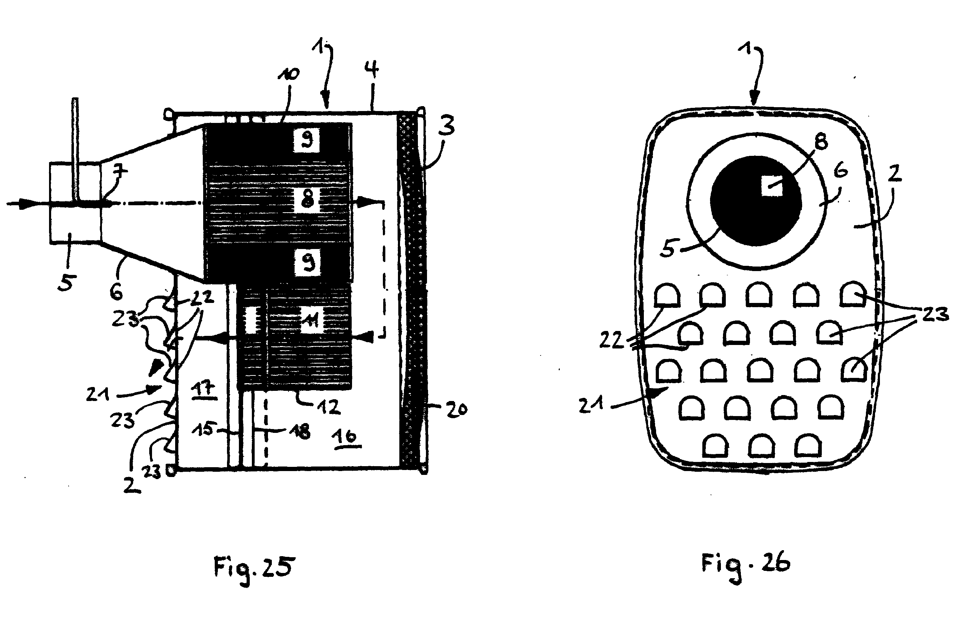

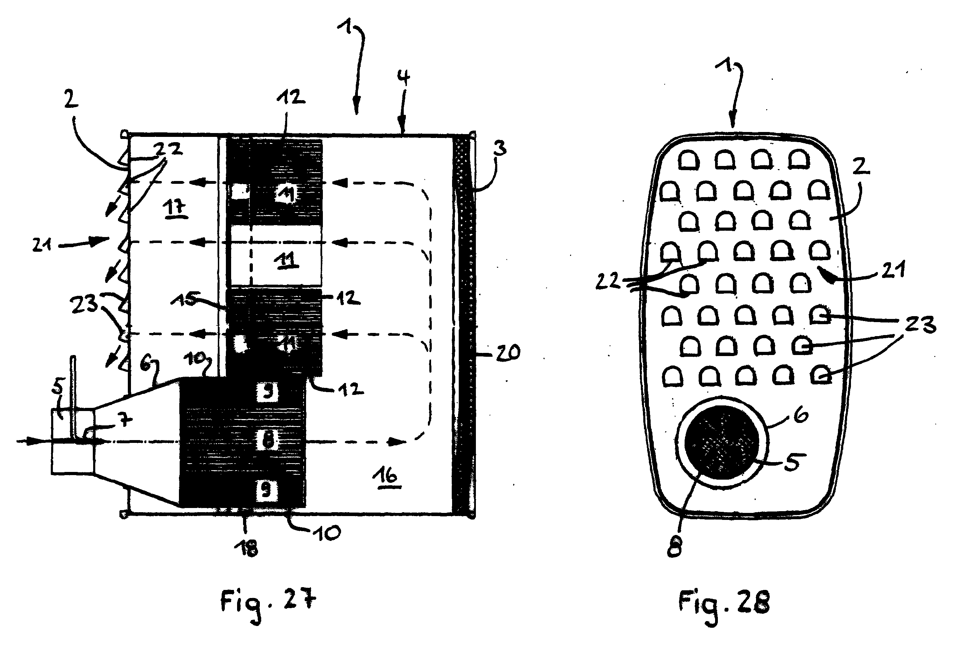

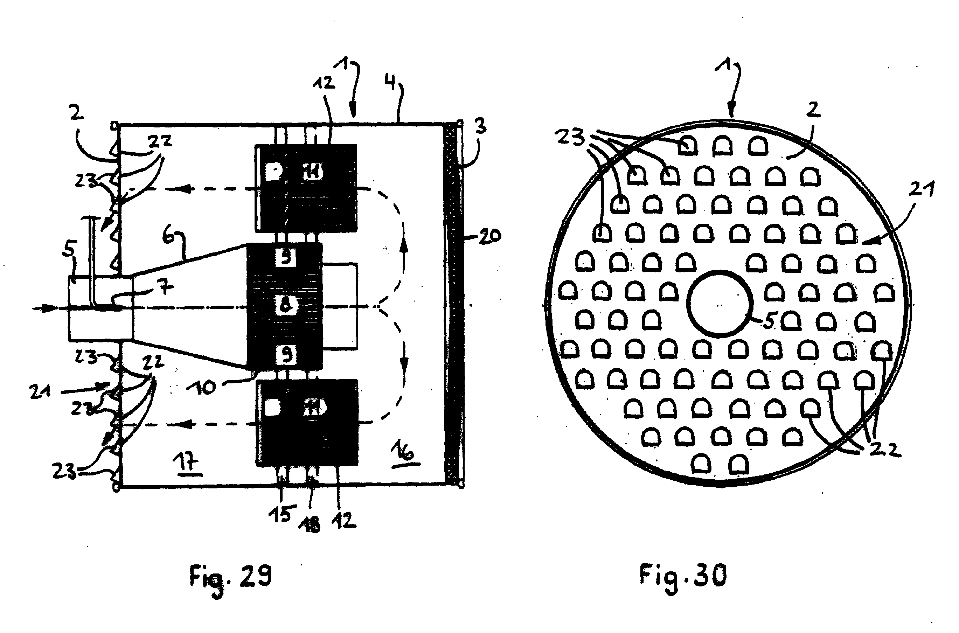

In den Figuren ist jeweils eine kombinierte Abgasnachbehandlungs-/Schalldämpfungsvorrichtung gezeigt, die im Abgasstrang einer Brennkraftmaschine, insbesondere eines Dieselmotors eines Nutzfahrzeuges wie Lastkraftwagen oder Omnibus angeordnet ist. Diese Vorrichtung weist einen Schalldämpfer 1 auf, der räumlich durch eine vordere Stirnwand 2, eine hintere Stirnwand 3 sowie eine Umfangsaußenwand 4 begrenzt ist. Mit 5 ist ein Rohrstutzen bezeichnet, der in den Beispielen gemäß Fig. 1 bis 24 in der vorderen Stirnwand 2 gegeben und an den eine von der Brennkraftmaschine kommende (nicht dargestellte) Abgasleitung angeschlossen ist. In diese Abgasleitung können je nach Anwendungs- bzw. Einsatzzweck und weiterer Ausgestaltung der Abgasnachbehandlungsvorrichtung ein oder mehrer(e) Vorkatalysator(en) und/oder Vorschalldämpfer und/oder ein Hydrolysekatalysator mit Verdampfer eingebaut sein. Dem Hydrolysekatalysator wird ein Reduktionsmittel, zum Beispiel Harnstoff in Festkörperform oder eine wässrige Harnstofflösung mittels einer geeigneten Dosiereinrichtung zugeführt. Im Beispiel von Fig. 23-24 ist die Abgasleitung intern des Schalldämpfers 1 mit einem am Anschlussstutzen 5 angeschlossenen Rohrstück fortgeführt. An eine solche Abgasleitung mit solchen Einbauten kann sich eine wie in den Figuren 1 bis 24 gezeigte Abgasnachbehandlungs-/Schalldämpfungsvorrichtung anschließen. Bei den Beispielen gemäß Figuren 25 bis 30 bildet der Anschlussstutzen 5 den Abgaseintrittsbereich eines sich trichterartig in den Schalldämpfer-Innenraum hinein erweiternden Diffusorrohres 6, in das mittels einer schematisch angedeuteten Düse 7 das wie vorstehend erwähnte Reduktionsmittel eindüsbar ist. Wie die Figuren 25, 27 und 29 zeigen, kann das Diffusorrohr 6 entweder im Bereich des Anschlussstutzens 5 oder seines kegligen Mantelbereiches gasdicht in einer Öffnung der Stirnwand 2 befestigt sein. Im Gegensatz zu den Beispielen von Fig. 1 bis 24 ist außen am Anschlussstutzen 5 des Diffusorrohres 7 eine von der Brennkraftmaschine kommende Abgasleitung angeschlossen, in die lediglich ein oder mehrere Vorkatalysatoren und/oder Vorschalldämpfer eingebaut sind. Ein Hydrolysekatalysator 8 mit Verdampfer 9 schließt sich mit seinem Gehäuse 10 koaxial unmittelbar an den Diffusor 7 an und ist somit in diesen Fällen in den Innenraum des Schalldämpfers 1 integriert.

In den Innenraum des Schalldämpfers 1 ist generell wenigstens ein Abgasnachbehandlungsmodul 11 eingebaut, bei dem es sich jeweils je nach Anwendungs- und Einsatzweck um einen Katalysatormodul und/oder Partikelfiltermodul und/oder Partikelabscheidermodul handeln kann. Außerdem ist der Innenraum des Schalldämpfers 1 sowohl auf diese Modulbauart als auch die Anzahl der Module 11 und deren Befestigung bzw. Halterung und ebenso die Schalldämpfung hin ausgebildet bzw. ausgestaltet.

Ein Katalysatormodul enthält z. B. eingangs einen SCR-Katalysator, dem erforderlichenfalls ein Sorptionsoxikatalysator als Ammoniaksperrkat folgen kann. Ein Partikelfiltermodul kann z. B. einen CRT-Filter (continuously regenerating trap) und gegebenenfalls davor einen Vorkatalysator zur NO₂-Anreicherung des Abgases aufweisen. Ein Partikelabscheidermodul kann z. B. einen Partikel abscheidenden Katalysator spezieller Bauart aufweisen, z. B. einen solchen gemäß der DE 199 34 932 A1.

Jeder Modul 11 weist ein mit 12 bezeichnetes Modulgehäuse auf, das im Schalldämpfer 1, wie nachfolgend noch näher erläutert, fixiert ist.

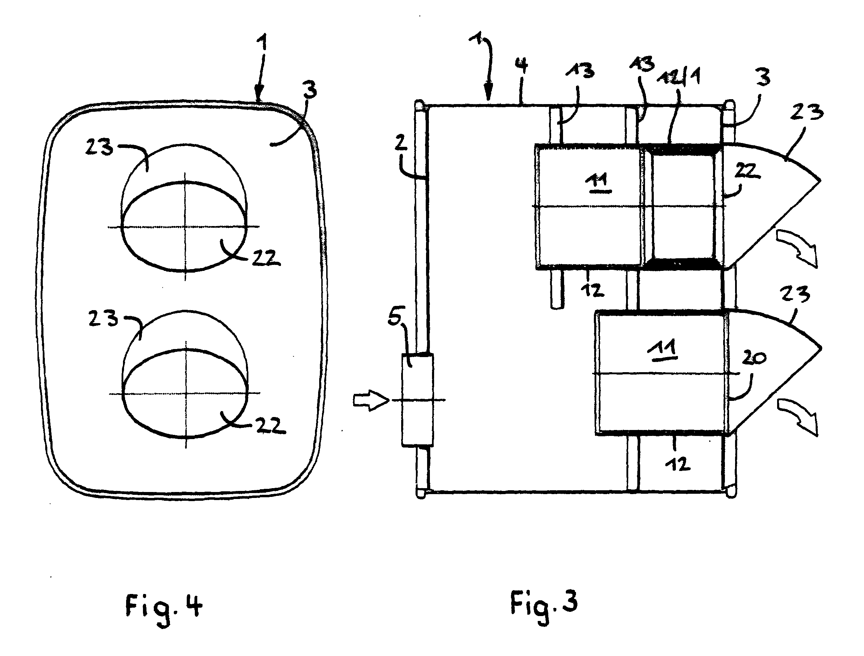

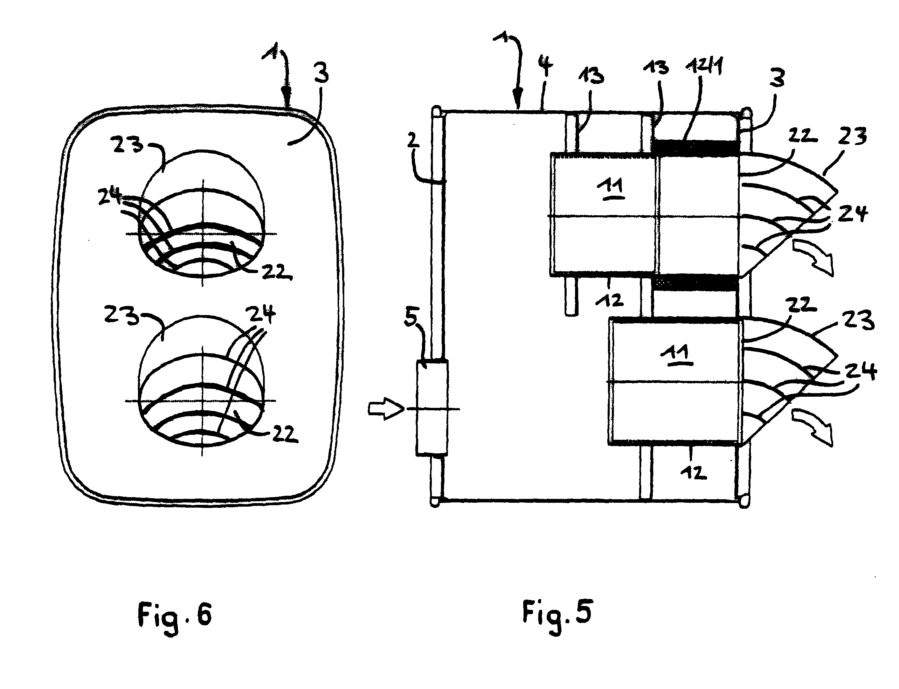

Im Fall der Beispiele gemäß Fig. 1-2, 3-4 und 5-6 sind zwei Module 11 über- bzw. nebeneinander achsparallel zur Schalldämpfer-Längsachse in den Innenraum des Schalldämpfers 1 eingebaut und dort durch wenigstens eine perforierte, d. h. nicht gasdichte Vertikalwand 13 gehalten. Dabei ist der eine - in der Zeichnung untere - Modul 11 mit seinem Gehäuse 12 bis ganz an die abgasaustrittsseitige Stirnwand 3 herangerückt und gasdicht mit dieser verbunden. Der andere Modul 11 dagegen weist ein über die eigentliche Kat- bzw. Filter- oder Partikelabscheiderzone hinaus um einen Abschnitt 12/1 verlängertes Gehäuse 12 auf, das am abgasaustrittsseitigen Ende seines Abschnitts 12/1 ebenfalls gasdicht an der Stirnwand 3 angeschlossen ist. Im Fall des Beispiels gemäß Fig. 1-2 sind Schalldämpfungsmittel in nicht dargestellter Weise an geeigneten Innenwandbereichen des Schalldämpfers 1 angebracht. Im Beispiel gemäß Fig. 3-4 sind außerdem Schalldämpfungsmittel 14 in den Rohrabschnitt 12/1 des Modulgehäuses 12 eingebaut. Im Beispiel gemäß Fig. 5-6 sind solche Schalldämpfungsmittel 14 außen um den Rohrabschnitt 12/1 des Modulgehäuses 12 angeordnet.

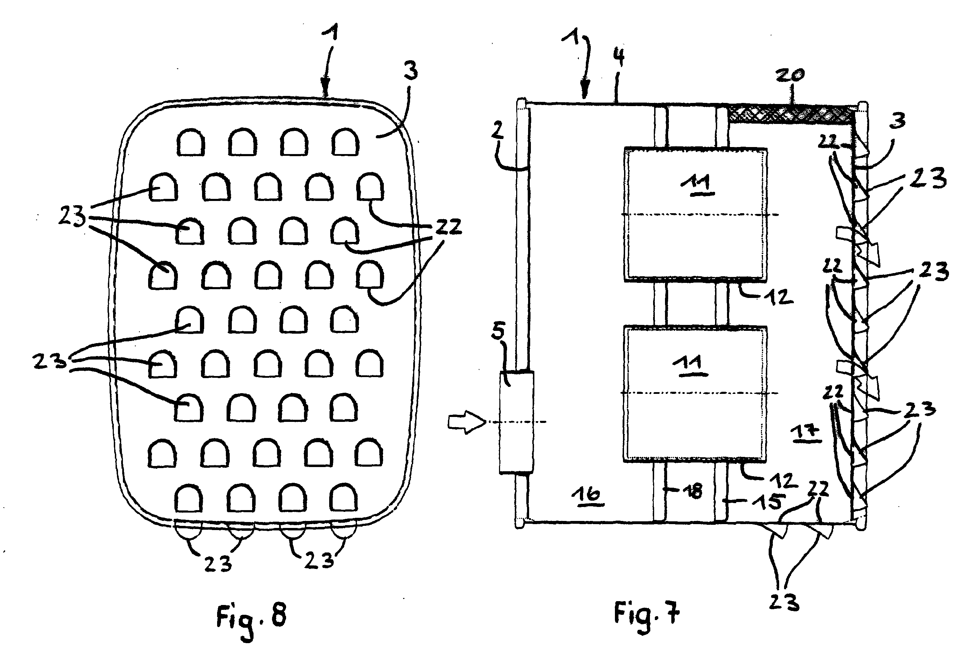

Im Fall der Beispiele gemäß Figuren 7-8, 9-10, 11-12, 13-14, 21-22, 23-24, 25-26, 27-28 und 29-30 ist der Schalldämpfer 1 intern durch eine gasdichte vertikale Zwischenwand 15 in eine Einströmkammer 16 und eine Ausströmkammer 17 unterteilt. Die Zwischenwand 15 dient außerdem zusammen mit einer weiteren, zu ihr parallel beabstandeten, gelochten oder andersartig durchbrochenen, daher nicht gasdichten Haltewand 18 zur räumlich sicheren Befestigung der Module 11 im Schalldämpferinnenraum, so dass sich die Abgaseintrittsöffnung der sich achsparallel zur Schalldämpferlängsachse erstreckenden Module 11 im Bereich der Einströmkammer 16 und die Abgasaustrittsöffnung der Module 11 im Bereich der Ausströmkammer 17 befindet.

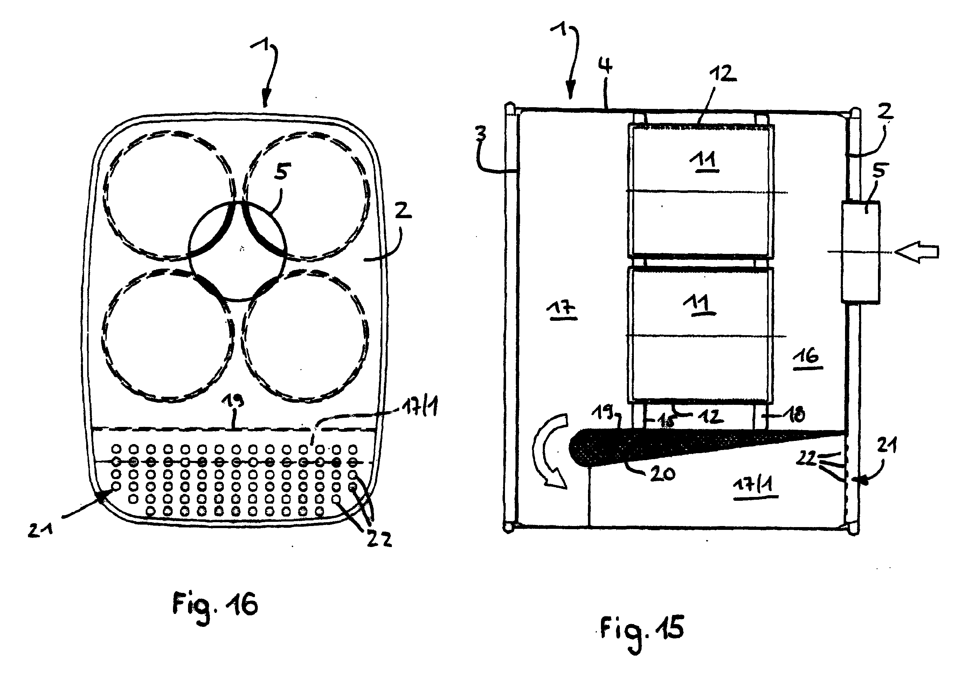

Im Fall der Beispiele gemäß Fig. 15-16, 17-18 und 19-20 ist der Schalldämpfer 1 intern durch den Einbau eines Querzwischenbodens 19 und einer gasdicht mit dieser sowie der Umfangsaußenwand 4 verbundenen vertikalen Zwischenwand 15 in eine Einströmkammer 16 und eine Ausströmkammer 17 unterteilt. Auch in diesen Fällen ist eine weitere nicht gasdichte Haltewand 18 parallel beabstandet zur Zwischenwand 15 vorgesehen, mittels welcher Wände 15, 18 die achsparallel zur Schalldämpferlängsachse ausgerichteten Module 11 sicher im Schalldämpfer 1 gehaltert sind, derart, dass ihre Abgaseintrittsöffnung im Bereich der Einströmkammer 16 und ihre Abgasaustrittsöffnung im Bereich der Ausströmkammer 17 liegt. Aufgrund des Querzwischenbodens 19 ist im Fall der Beispiele gemäß Fig. 15-16, 17-18 und 19-20 unterhalb desselben eine Teilkammer 17/1 der Abströmkammer 17 gegeben.

Der Schalldämpfer 1 ist im Bereich der Ausströmkammer 17, 17/1 an den diese begrenzenden Innenwandbereichen zumindest partiell mit schallabsorbierendem Material 20 ausgekleidet.

Unabhängig von seiner sonstigen Ausgestaltung kennzeichnet sich diese kombinierte Abgasnachbehandlungs-/Schalldämpfungsvorrichtung erfindungsgemäß dadurch, dass der Schalldämpfer 1 entweder an seiner abgasaustrittsseitigen Stirnwand 3 - siehe Fig. 1-2, 3-4, 5-6, 7-8, 9-10, 11-12, 13-14 - und/oder dem abgasaustrittsseitigen Endbereich seiner Umfangsaußenwand 4 - siehe Fig. 7-8, 19-20, 21-22 - oder einem für Abgasauslass vorgesehenen Bereich 21 seiner abgaseintrittsseitigen Stirnwand 2 - siehe Fig. 15-16, 17-18, 23-24, 25-26, 27-28, 29-30 - eine oder mehrere für einen direkten, endrohrlosen Auslass des gereinigten Abgases in die Atmosphäre entsprechend gestaltete Auslassöffnung(en) 22 aufweist.

Dabei kann jeder Auslassöffnung 22 oder einer Gruppe von Auslassöffnungen ein dem in die Atmosphäre austretendem Abgas eine bestimmte Richtung oder Richtungsänderung, z. B. nach unten oder schräg nach hinten zur Fahrbahn hin aufprägendes Strömungsleitelement 23 zugeordnet sein. Außerdem kann jedes Strömungsleitelement 23 auch im Hinblick darauf ausgebildet sein, dass dem durch- bzw. vorbeiströmenden Abgas eine definierte Druckentspannung aufprägbar ist. Letzteres kann durch speziell eingebaute oder vorgesehene Leitwände bzw. weitere Umlenkorgane 24 realisiert sein.

Im Fall der Beispiele gemäß Fig. 1-2, 3-4 und 5-6 sind zwei Auslassöffnungen 22 in der Stirnwand 3 vorgesehen, wobei sich jede derselben mit der Abgasaustrittsöffnung des jeweiligen Moduls 11 bzw. dessen Gehäuse 12, 12/1 deckt. Außerdem ist jeder der beiden Auslassöffnungen 22 ein nach Art einer Hutze ausgebildetes Strömungselement 23 zugeordnet. Jede Hutze ist einzeln vorgefertigt und an der Stirnwand 3 des Schalldämpfers 1 außen befestigt. Jede Hutze ist dabei durch ein Rohrbogensegment gebildet, dessen Umlenkwinkel - je nach dem Grad der gewünschten Abgasumlenkung nach unten bzw. schräg nach hinten unten - zwischen ca. 30° und 90° beträgt.

Beim Beispiel gemäß Fig. 5-6 sind in jede Hutze 23 mehrere Leitwände 24 eingebaut, die sich parallel zur Umlenklinie entweder mit gleichbleibendem Abstand (wie dargestellt) oder sich zur Bildung mehrerer Diffusorzonen mit zum Austrittsbereich der Hutze hin vergrößernden Abstand erstrecken.

Im Beispiel von Fig. 7-8 ist eine Vielzahl von Auslassöffnungen 22 in der abgasaustrittsseitigen Stirnwand 3 vorgesehen und jeder dieser Auslassöffnungen 22 eine nach Art einer Hutze ausgebildetes Strömungsleitelement 23 zugeordnet. In diesem Fall sind die Auslassöffnungen 22 und die zugeordneten Hutzen 23 einstückig mit der Stirnwand 3 des Schalldämpfers 1 durch Ausstanzen und Ausprägen hergestellt.

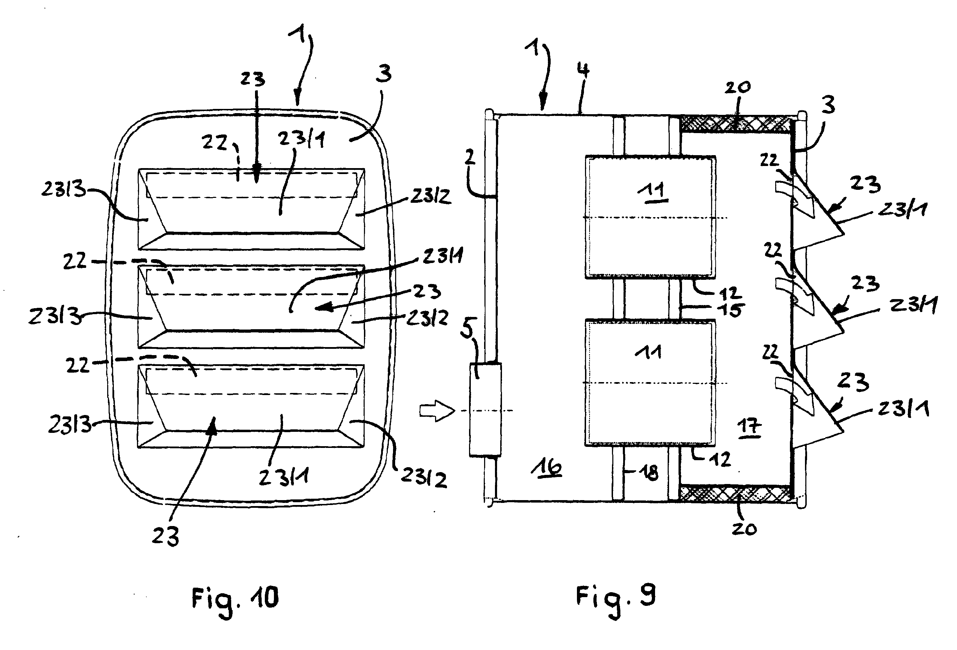

Im Beispiel von Fig. 9-10 sind drei Auslassöffnungen 22 in der abgasaustrittsseitigen Stirnwand 3 des Schalldämpfers 1 vorgesehen, von denen jede durch ein nach Art einer Hutze gestaltetes Strömungsleitelement 23 überdeckt ist, wobei die jeweilige Hutze eine schräg nach hinten unten gerichtete Abgasleitwand 23/1 aufweist, die in seitliche Begrenzungswände 23/2, 23/3 übergeht und somit eine Art Diffusor bildet.

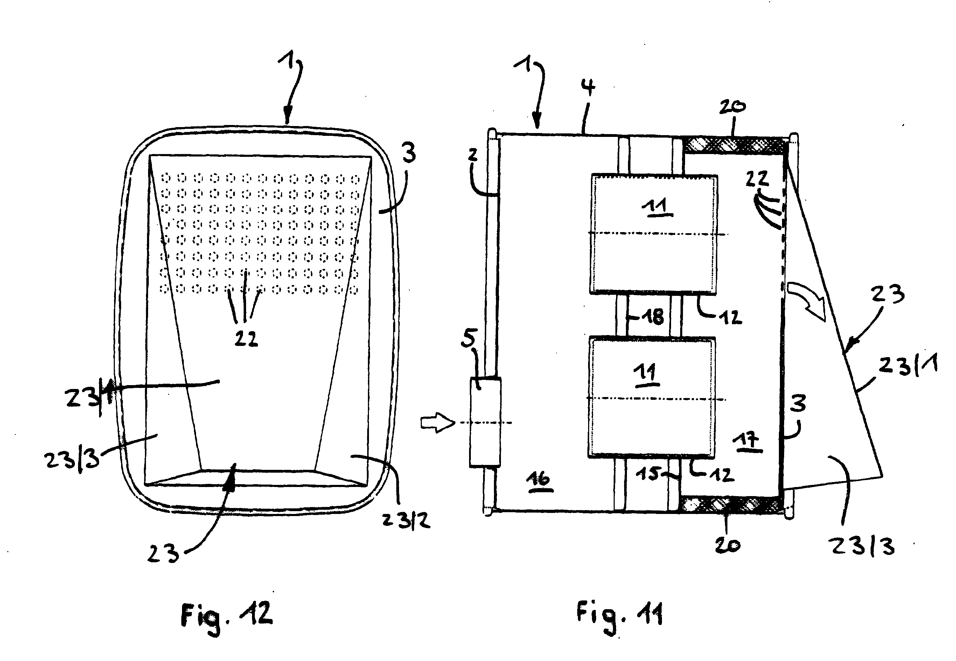

Im Beispiel gemäß Fig. 11-12 ist eine Vielzahl von Auslassöffnungen 22 in der oberen Hälfte der abgasaustrittsseitigen Stirnwand 3 des Schalldämpfers 1 vorgesehen. Diese Auslassöffnungen 22 sind von einem außen auf die Stirnwand 3 aufgesetzten, nach Art einer Hutze gestalteten Strömungsleitelement 23 überdeckt. Diese Hutze weist eine schräg nach hinten unten weit heruntergezogene Abgasleitwand 23/1 auf, die in seitliche Begrenzungswände 23/2, 23/3 übergeht. Strömungsmäßig bildet diese Hutze einen sich keglig erweiternden Diffusor.

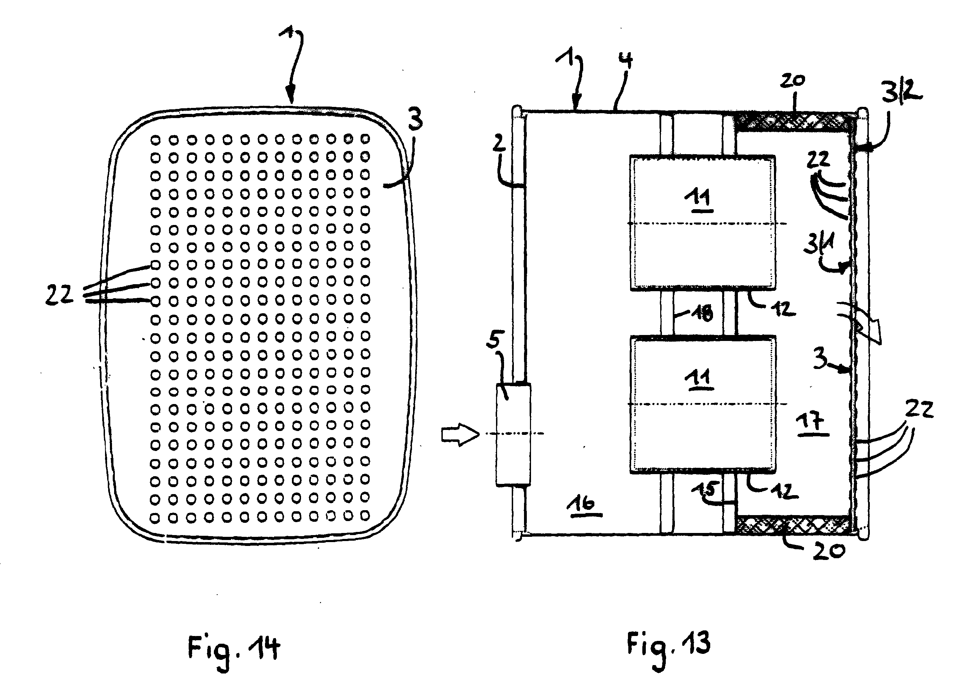

Im Beispiel gemäß Fig. 13-14 besteht die abgasaustrittsseitige Stirnwand 3 des Schalldämpfers 1 aus mindestens zwei um ein gewisses Maß parallel voneinander beabstandeten Teilwänden 3/1, 3/2, wobei der größte Teil jeder derselben mit die Auslassöffnungen 22 bildenden Löchern perforiert ist. Dabei sind die Auslassöffnungen 22 in der äußeren Teilwand 3/2 so angeordnet, dass sie nicht zu jenen in der inneren Teilwand 3/1 angeordneten Auslassöffnungen 22 fluchten. Vielmehr sind die Auslassöffnungen 22 der inneren Teilwand 3/1 in ihrer axialen Projektion außen durch einen nicht perforierten Wandbereich der äußeren Teilwand 3/2, der neben bzw. zwischen benachbarten Auslassöffnungen 22 gegeben ist, abgedeckt. Das aus der Ausströmkammer 17 austretende Abgas gelangt nach Durchströmung der Auslassöffnungen 22 der inneren Teilswand 3/1 in den Zwischenraum zwischen beiden Teilwänden 3/1, 3/2 und tritt von dort über die Auslassöffnungen 22 in der äußeren Teilwand 3/2 in die Atmosphäre aus. Es wäre denkbar, dieser Stirnwand 3/1, 3/2 ein Strömungsleitelement 23 in Form einer Hutze zuzuordnen, die wie jene gemäß Fig. 11-12 ausgebildet sein könnte.

In den Beispielen von Fig. 15-16 und 17-18 ist jener untere Bereich 21 der abgaseintrittsseitigen Stirnwand 2, der die Teilkammer 17/1 der Ausströmkammer 17 abdeckt, durch eine Vielzahl von die Auslassöffnungen 22 bildenden Löchern perforiert. Intern des Schalldämpfers 1 gelangt das gereinigte Abgas über die Ausströmkammer 17 und deren unteren Teilraum 17/1, der einen diffusorähnlichen Querschnitt aufweist, zur abgaseintrittsseitigen Stirnwand 2 und tritt dann über die Auslassöffnungen 22 in die Atmosphäre aus. Es wäre denkbar, diesen mit Auslassöffnungen 22 perforierten Bereich 21 der Stirnwand 2 mit einem nach Art einer Hutze ausgebildeten Strömungsleitelement 23 zu überdecken, um dem austretenden Abgas eine Richtungskomponente nach unten bzw. schräg nach hinten unten aufzuprägen.

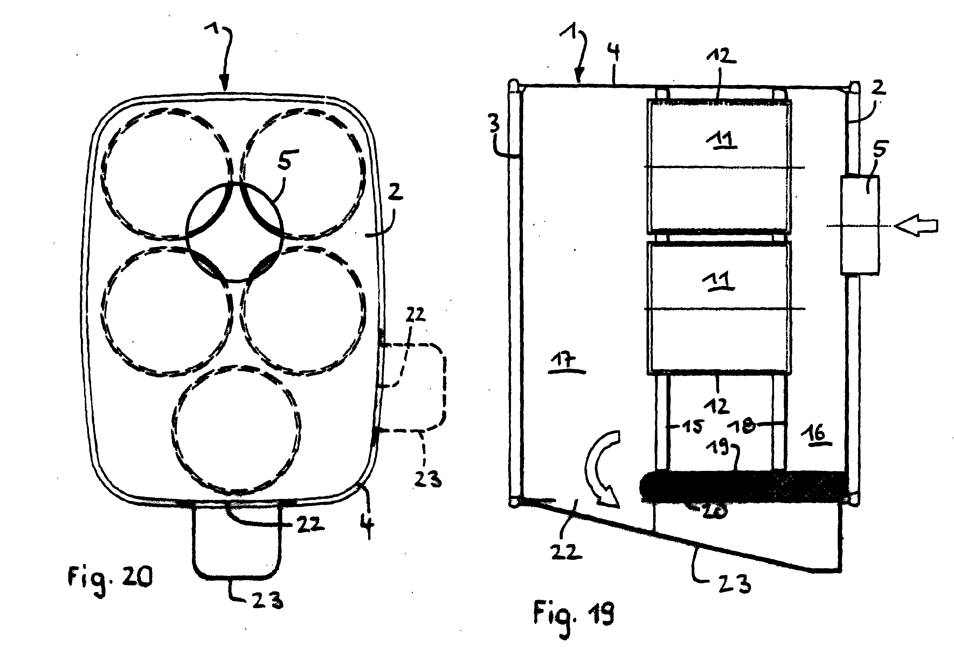

Im Beispiel von Fig. 19-20 ist im Bereich der Ausströmkammer 17 in der Außenumfangswand 4 eine Auslassöffnung 22 vorgesehen, der ein nach Art einer Hutze ausgebildetes und sich diffusorartig erweiterndes Strömungsleitelement 23 zugeordnet ist. Dieses erstreckt sich von der Stirnwand 3 in Richtung Stimwand 2 ganz oder teilweise bis zu dieser hin. Anstelle nur einer Auslassöffnung 22 im unteren Bereich des Schalldämpfers 1 könnten auch noch wenigstens eine weitere seitliche Auslassöffnung 22 in der Umfangsaußenwand 4 vorgesehen sein, der ebenfalls ein entsprechendes Strömungsleitelement - wie dargestellt - zugeordnet wäre. Dieser Fall ist gestrichelt in Fig. 20 andeutet.

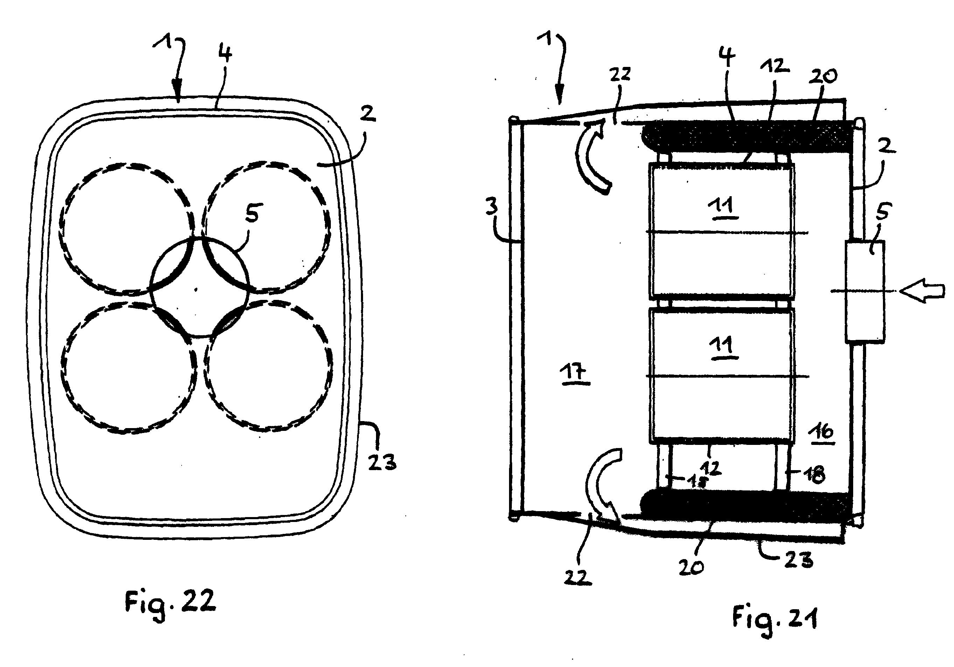

Im Beispiel gemäß Fig. 21-22 sind im Bereich der Ausströmkammer 17 in der Umfangsaußenwand 4 mehrere Auslassöffnungen 22 vorgesehen. Das durch diese austretende Abgas wird in einem Strömungsleitelement 23, das die gesamte Umfangsaußenwand 4 sich diffusorartig erweiternd umgibt, kanalisiert in die Atmosphäre ausgelassen.

In den Beispielen gemäß Fig. 23-24, 25-26, 27-28 und 29-30 ist ein Großteil der abgaseintrittsseitigen Stirnwand 2 des Schalldämpfers 1, die in diesen Fällen die Ausströmkammer 17 stirnseitig begrenzt, mit einer Vielzahl von Auslassöffnungen 22 ausgestaltet, von denen jeder ein durch eine Hutze gebildetes Strömungsleitelement 23 zugeordnet ist. Auch in diesen Fällen sind die Auslassöffnungen 22 und die Hutzen 23 einstückig mit der Stirnwand 2 durch Ausstanzen und Ausprägen ausgebildet.

Wie die vorbeschriebenen Beispiele zeigen, kommt die erfindungsgemäße Vorrichtung ohne Endrohr aus. Die Schalldämpfung wird anstelle dessen durch eine entsprechende Bemessung der Ausströmkammer und gezielte Schalldämpfungsmaßnahmen im Innenraum des Schalldämpfers 1 bewerkstelligt.

## Patentansprüche

1. Kombinierte Abgasnachbehandlungs-/Schalldämpfungsvorrichtung im Abgasstrang einer Brennkraftmaschine, insbesondere Dieselmotor eines Nutzfahrzeuges wie Lastkraftwagen oder Omnibus, mit einem Schalldämpfer, der räumlich durch eine vordere und hintere Stirnwand sowie eine Umfangsaußenwand begrenzt ist und in dessen Innenraum nachzubehandelndes Abgas einleitbar ist, das nach Durchströmung wenigstens eines dort eingebauten Abgasnachbehandlungsmoduls gereinigt und mittelbar schallgedämpft wieder aus dem Schalldämpfer ausleitbar ist, **dadurch gekennzeichnet, dass** der Schalldämpfer (1) an seiner abgasaustrittsseitigen Stirnwand (3) und/oder dem abgasaustrittsseitigen Endbereich seiner Umfangsaußenwand (4) oder einem für Abgasauslass vorgesehenen Bereich (21) seiner abgaseintrittsseitigen Stirnwand (2) eine oder mehrere für einen direkten, endrohrlosen Auslass des gereinigten Abgases in die Atmosphäre entsprechend gestaltete Auslassöffnung(en) (22) aufweist.

2. Kombinierte Abgasnachbehandlungs-/Schalldämpfungsvorrichtung nach Anspruch 1, **dadurch gekennzeichnet, dass** jeder Auslassöffnung (22) oder einer Gruppe von Auslassöffnungen (22) ein dem austretenden Abgas eine bestimmte Richtung oder Richtungsänderung aufprägendes Strömungsleitelement (23) zugeordnet ist.

3. Kombinierte Abgasnachbehandlungs-/Schalldämpfungsvorrichtung nach Anspruch 2, **dadurch gekennzeichnet, dass** jedes Strömungsleitelement (23) auch im Hinblick darauf, dass dem durch- bzw. vorbeiströmenden Abgas eine definierte Druckentspannung aufprägbar ist, ausgebildet ist.

4. Kombinierte Abgasnachbehandlungs-/Schalldämpfungsvorrichtung nach einem der Ansprüche 1 bis 3, **dadurch gekennzeichnet, dass** der bzw. jeder der in den Innenraum des Schalldämpfers (1) eingebaute(n) Abgasnachbehandlungsmodul(e) (11) mit seinem Gehäuse (12) direkt oder über ein schallabsorbierend ausgebildetes Adapterrohr (12/1) bis zur abgasaustrittsseitigen Stirnwand (3), dort einer in dieser mit entsprechendem Querschnitt ausgebildeten Auslassöffnung (22) herangeführt ist.

5. Kombinierte Abgasnachbehandlungs-/Schalldämpfungsvorrichtung nach einem der Ansprüche 1 bis 3, **dadurch gekennzeichnet, dass** der Schalldämpfer (1) intern durch eine Zwischenwand (15) in eine Einströmkammer (16) und eine Ausströmkammer (17) unterteilt ist, in dessen Einströmkammer (16) über ein Abgasrohr nachzubehandelndes Abgas einleitbar und nach Durchströmung des Abgasnachbehandlungsmoduls (11) bzw. der Abgasnachbehandlungsmodule (11) gereinigt in die Ausströmkammer (17) überleitbar und aus dieser unmittelbar über die Auslassöffnung(en) (22) in die Atmosphäre ausleitbar ist.

6. Kombinierte Abgasnachbehandlungs-/Schalldämpfungsvorrichtung nach einem der Ansprüche 1 bis 3, **dadurch gekennzeichnet, dass** jeder Auslassöffnung (22) ein nach Art einer Hutze ausgebildetes Strömungsleitelement (23) zugeordnet ist.

7. Kombinierte Abgasnachbehandlungs-/Schalldämpfungsvorrichtung nach Anspruch 6, **dadurch gekennzeichnet, dass** die Hutze(n) (23) einzeln hergestellt und dann außen an der die Auslassöffnungen (22) aufweisenden Stirnwand (3) des Schalldämpfers (1) befestigt ist bzw. sind.

8. Kombinierte Abgasnachbehandlungs-/Schalldämpfungsvorrichtung nach einem der Ansprüche 6 und 7, **dadurch gekennzeichnet, dass** eine Hutze (23) durch ein Rohrbogensegment gebildet ist, dessen Umlenkwinkel - je nach dem Grad der gewünschten Abgasumlenkung nach unten - zwischen ca. 30° und 90° beträgt.

9. Kombinierte Abgasnachbehandlungs-/Schalldämpfungsvorrichtung nach Anspruch 8, **dadurch gekennzeichnet, dass** in die Hutze (23) mehrere Leitwände (24) eingebaut sind, die sich parallel zur Umleitlinie entweder mit gleichbleibendem Abstand oder sich zur Bildung mehrerer Diffusorzonen mit zum Austrittsbereich der Hutze (23) hin vergrößerndem Abstand erstrecken.

10. Kombinierte Abgasnachbehandlungs-/Schalldämpfungsvorrichtung nach einem der Ansprüche 6 und 7, **dadurch gekennzeichnet, dass** die Hutze (23) eine schräg nach hinten unten gerichtete Abgasleitwand (23/1) aufweist, die in seitliche Begrenzungswände (23/2, 23/3) übergeht.

11. Kombinierte Abgasnachbehandlungs-/Schalldämpfungsvorrichtung nach Anspruch 6, **dadurch gekennzeichnet, dass** die Auslasskanäle (22) und die zugeordneten Hutzen (23) einstückig mit der betreffenden Stirnwand (2 bzw. 3) des Schalldämpfers (1) durch Ausstanzen und Ausprägen hergestellt sind.

12. Kombinierte Abgasnachbehandlungs-/Schalldämpfungsvorrichtung nach einem der Ansprüche 1 bis 3, **dadurch gekennzeichnet, dass** eine größere Anzahl von Auslassöffnungen (22) nur in einem bestimmten Bereich einer Stirnwand (2 bzw. 3) des Schalldämpfers (1), z. B. nur in deren oberer oder nur deren unterer Hälfte angeordnet ist, und dass diesen Auslassöffnungen (22) ein gemeinsames, nach Art einer Hutze ausgebildetes Strömungsleitelement (23) zugeordnet ist.

13. Kombinierte Abgasnachbehandlungs-/Schalldämpfungsvorrichtung nach einem der vorhergehenden Ansprüche, **dadurch gekennzeichnet, dass** die bzw. jede Hutze (23) einen sich in Ausströmrichtung trichterartig erweiternden Diffusor bildet.

14. Kombinierte Abgasnachbehandlungs-/Schalldämpfungsvorrichtung nach Anspruch 6, **dadurch gekennzeichnet, dass** dann, wenn die Auslassöffnung(en) (22) in der Umfangsaußenwand (4) gegeben ist bzw. sind, dieser bzw. diesen Auslassöffnung(en) (22) ein bzw. je ein oder ein gemeinsames nach Art einer Hutze gestaltetes Strömungsleitelement (23) zugeordnet ist, das sich von der einen Stirnwand (2 bzw. 3) zur bzw. in Richtung der anderen Stirnwand (3 bzw. 2) hin erstreckt und entweder Teilbereiche der Umfangsaußenwand (4) oder die gesamte Umfangsaußenwand (4) des Schalldämpfers (1) überdeckt.

15. Kombinierte Abgasnachbehandlungs-/Schalldämpfungsvorrichtung nach Anspruch 5, **dadurch gekennzeichnet, dass** die Ausströmkammer (17) in dem Fall, wenn die Auslassöffnung(en) (22) in einem Teilbereich der abgaseintrittsseitigen Stirnwand (2) gegeben sind, durch eine oder mehrere Längszwischenwände zur Einströmkammer (16) hin abgeschottet ist und solchermaßen raummäßig erweitert bis zu der/den Auslassöffnung(en) (22) in der Stirnwand (2) hinreicht.

16. Kombinierte Abgasnachbehandlungs-/Schalldämpfungsvorrichtung nach Anspruch 5, **dadurch gekennzeichnet, dass** der Schalldämpfer (1) im Bereich der Ausströmkammer (17) innen zumindest partiell mit schallabsorbierendem Material ausgekleidet ist.
